# DEMANDE DE BREVET EUROPEEN

(11) **EP 4 368 483 A1**
(43) Date de publication de la demande: **15.05.2024**
(21) Numéro de dépôt: 23208682.7
(22) Date de dépôt: 09.11.2023
(51) Int. Cl.: B62J 1/00

(54) **DISPOSITIF POUR LA PRISE D EMPREINTE POUR LA FABRICATION SUR-MESURE D'UN SIÈGE POUR VÉHICULE DE TYPE VÉLO ET PROCÉDÉ DE FABRICATION D'UN TEL DISPOSITIF**

(30) Priorité: 10.11.2022 FR 2211724; 10.11.2022 FR 2211726
(71) Demandeur: SAFEILM, 52240 Breuvannes-en-Bassigny (FR)
(72) Inventeur: LENAT, Thierry, 52240 Breuvannes-en-Bassigny (FR); MIGNOT, Julien, L4534 Differdange (LU)
(74) Mandataire: Fidal Innovation

(57) **Abrégé**

Dispositif (1) pour la prise d'empreinte pour la fabrication sur-mesure d'un siège (100) pour vélo, le dispositif (1) comprenant un corps (2) principal présentant une portion (3) dite d'assise et une portion (4) dite d'assemblage, dispositif (1) pour la prise d'empreinte dans lequel :
- la portion (3) d'assise présente une surface (5) et un contour (6) définissant au moins en partie une forme anatomo-fonctionnelle déterminée, ladite surface (5) comprenant un creux (7) formant une cavité de réception pour recevoir de manière temporaire un matériau de prise d'empreinte ;
- la portion (4) d'assemblage est fixée à un dispositif (11) d'assemblage amovible destiné à être fixé rigidement de manière temporaire sur un cadre du vélo.

## Description

### DOMAINE DE L'INVENTION

La présente invention se rapporte au domaine de sièges telles que des selles pour vélo. Toutefois, l'invention pourra être appliquée aux sièges d'autres véhicules dans lesquels les caractéristiques de confort peuvent être proches de celles des vélos, comme les motos.

Plus précisément encore, l'invention se rapporte au domaine de la fabrication sur-mesure de selle. Notamment, elle permet de prendre l'empreinte d'un utilisateur avec une grande précision afin de fabriquer une selle parfaitement adaptée à l'utilisateur.

### ARRIÈRE-PLAN TECHNOLOGIQUE

Dans le domaine des selles pour vélo, la forme de la selle est une caractéristique importante pour le confort et les performances du cycliste. Il existe une multitude de formes de selles étudiées précisément selon ces critères. Ces formes standards sont dites anatomiques, et sont censées être adaptées pour la plupart des cyclistes. En pratique toutefois, ces selles standards ne sont jamais parfaitement adaptées à chaque cycliste.

Une avancée est de proposer une selle sur-mesure, c'est-à-dire qui est personnalisée pour le cycliste utilisateur de ladite selle. Le principe consiste alors à prendre une empreinte de la partie du fessier du cycliste qui sera en contact avec la selle, et de fabriquer la selle sur-mesure à partir de cette empreinte. Les coûts de fabrication de selles sur-mesure étant plus élevés que pour la fabrication de selles standards, les procédés existants visent généralement à baisser ces coûts.

Le document EP1878644 propose un exemple d'un tel procédé dans lequel une coque de selle est pourvue d'un matériau d'empreinte de plasticité différente selon les conditions anatomiques du cycliste. Le cycliste est assis sur la selle dans sa position assise habituelle et déforme le matériau d'empreinte avec son poids corporel et les mouvements qu'il effectue. L'empreinte résultante est placée dans un dispositif de duplication, est vissée à celui-ci et est recouverte de plâtre dur. Après la prise du plâtre, le plâtre coulé est séparé du dispositif de duplication. Le modèle en plâtre peut ensuite être rempli de mousse pour obtenir la selle sur-mesure. Le procédé par moulage est toutefois onéreux et fastidieux à mettre en oeuvre. La précision du moulage, avec notamment des zones de plasticité différente, est délicate à maîtriser, pouvant aboutir à une selle présentant des défauts pour son utilisateur. En outre, la prise d'empreinte peut manquer de précision du fait que le matériau d'empreinte, nécessairement déformable sous le poids du cycliste, peut s'écouler au-delà de la forme de la selle attendue.

Le document US20080018147 propose un autre exemple dans lequel un dispositif permettant de prendre une empreinte comprend une selle avec une surface d'assise et un puits de moulage. Le puits de moulage comprend un bassin pour un matériau de moulage. Un système de montage est prévu pour monter le dispositif sur un vélo. Une personne s'assoit sur le dispositif avec le puits rempli de matériau de moulage, afin de marquer un profil. Une fois le matériau durci, il est utilisé pour former une plaque en transférant la forme du profil sur la plaque. Une fois la plaque durcie, elle est insérée dans un logement d'une selle. Ainsi, la selle ne comprend qu'une portion sur-mesure, le reste étant préfabriqué de manière standard et comprend des moyens pour permettre à la plaque de s'y fixer. En outre, seule une région restreinte de la selle, globalement vers le milieu la selle, est sur-mesure. Notamment, les bords sont standards. Or, les bords de la selle peuvent notamment être source frottement et d'inconfort pour l'utilisateur.

Par ailleurs, dans les procédés de l'art antérieur, des étapes supplémentaires d'assemblage de la selle sur-mesure avec des moyens de fixation sur le vélo doivent être ajoutées, augmentant les coûts de fabrication.

L'invention vise notamment à apporter une solution à ces inconvénients.

Selon un premier aspect, l'invention propose une solution pour fabriquer une selle sur-mesure avec une précision accrue.

Selon un deuxième aspect, l'invention propose une solution pour fabriquer une selle sur-mesure offrant un confort augmenté à son utilisateur.

Selon un troisième aspect, l'invention propose une solution pour fabriquer une selle sur-mesure en réduisant les coûts.

Selon un quatrième aspect, l'invention propose une solution pour fabriquer une selle sur-mesure avec un système d'assemblage sur le vélo sans étape supplémentaire d'assemblage.

Selon un cinquième aspect, l'invention propose une solution pour fabriquer une selle sur-mesure avec un système d'assemblage sur le vélo rapidement.

### RÉSUMÉ DE L'INVENTION

Ainsi, selon un premier aspect, l'invention se rapporte à un dispositif pour la prise d'empreinte pour la fabrication sur-mesure d'un siège, notamment une selle, pour véhicule de type vélo. Le dispositif pour la prise d'empreinte comprend un corps principal qui présente une portion supérieure dite d'assise et une portion inférieure dite d'assemblage. En outre, la portion d'assise présente une surface et un contour qui définissent au moins en partie une forme anatomo-fonctionnelle déterminée. Ladite surface comprend un creux formant une cavité de réception pour recevoir de manière temporaire un matériau de prise d'empreinte. Ladite cavité de réception est bordée au moins en partie par ledit contour de la forme anatomo-fonctionnelle, de sorte que le contour assure la retenue du matériau de prise d'empreinte dans la cavité de réception. De plus, la portion d'assemblage est fixée à un dispositif d'assemblage amovible destiné à être fixé rigidement de manière temporaire sur un cadre du vélo.

Le dispositif pour la prise d'empreinte permet ainsi de réaliser une empreinte sur un vélo, et réaliser en quelque sorte un enregistrement des mouvements d'une partie du fessier et des jambes du cycliste en prenant son empreinte pendant qu'il pédale. La cavité de contour anatomo-fonctionnelle sur la portion d'assise permet notamment de définir un contour de l'empreinte. L'empreinte qui en résulte est plus fiable quant à la fidélité de la reproduction de l'anatomie du cycliste. Elle apporte en outre des données prédéterminées permettant de faciliter la fabrication d'une selle sur-mesure à partir de l'empreinte.

Selon un mode de réalisation, la cavité de réception s'étend sur une partie exclusivement de la surface de la portion d'assise, le contour de la forme anatomo-fonctionnelle bordant strictement une partie de la cavité de réception. Ainsi, la selle sur-mesure fabriquée à partir de l'empreinte comprend une partie personnalisée au cycliste, et une partie déterminée. La fabrication s'en trouve facilitée, et les coûts réduits. De préférence, la partie déterminée correspond à la partie de la selle qui s'étend entre les jambes du cycliste lorsqu'il pédale, et la partie en contact avec le fessier correspond à la partie personnalisée.

Selon une variante, la cavité de réception s'étend sur la totalité de la surface de la portion d'assise, le contour de la forme anatomo-fonctionnelle bordant l'ensemble de la cavité de réception. Ainsi, l'ensemble de la portion d'assise de la selle sur-mesure est personnalisée, pour un confort maximal pour le cycliste.

Selon un mode de réalisation, le dispositif de fixation peut être destiné à être assemblé sur un ensemble de rails, de la même manière que la plupart des selles. L'expérience du cycliste s'en trouve améliorée, aucun équipement spécifique n'étant à prévoir.

Selon un mode de réalisation, la cavité de réception présente une profondeur comprise entre 3 et 5 mm (millimètres). Une telle profondeur permet de prendre une empreinte de manière fiable, tout en contenant le matériau de prise d'empreinte dans la cavité.

Selon un deuxième aspect, l'invention propose un procédé de fabrication sur-mesure d'un siège, notamment une selle, pour véhicule de type vélo comprenant :
- La fixation d'un dispositif de prise d'empreinte tel que présenté ci-dessus sur un vélo par assemblage du dispositif de fixation sur le vélo et la mise en place d'un matériau de prise d'empreinte dans la cavité de réception ;
- L'installation d'un cycliste à qui est destiné le siège sur la portion d'assise ;
- L'utilisation du vélo par le cycliste, de manière à imprimer son empreinte sur le matériau de prise d'empreinte ;
- La récupération du dispositif de prise d'empreinte ;
- La réalisation d'un modèle numérique d'un siège à partir de l'empreinte ;
- La fabrication du siège sur-mesure par impression 3D à partir du modèle numérique.

Selon un mode de réalisation, la réalisation du modèle numérique comprend la prise d'images en 3D du matériau de prise d'empreinte, afin d'obtenir un modèle fiable.

Selon un mode de réalisation, le matériau de prise d'empreinte comprend un silicone réticulant par condensation. Ce matériau se révèle particulièrement adapté à la prise d'empreinte pour la fabrication d'une selle sur-mesure. Il se trouve en outre aisément et à des coûts raisonnables.

Selon un mode de réalisation, l'étape de fabrication par impression 3D comprend la fabrication d'un dispositif d'assemblage avec un vélo. Ainsi, en sortie de la machine de fabrication 3D, la selle est complète, prête à être assemblée sur des rails, sans étape supplémentaire d'assemblage avec des pièces rapportées. La fabrication est facilitée. Les coûts sont réduits.

Selon un mode de réalisation, après la fabrication par impression 3D, le procédé peut comprendre la mise en place d'une couche de rembourrage sur la selle, afin de s'adapter aux demandes éventuelles d'un cycliste. Une telle couche est tout à fait facultative, la portion d'assise de la selle sur-mesure offrant un confort optimal même avec un matériau rigide.

### BRÈVE DESCRIPTION DES DESSINS

Des modes de réalisation de l'invention seront décrits ci-dessous par référence aux dessins, décrits brièvement ci-dessous :
[Fig. 1] est une vue tridimensionnelle en perspective d'un dispositif de prise d'empreinte selon un mode de réalisation de l'invention ;
[Fig. 2] représente une vue de dessus, suivant une portion supérieure du dispositif de la figure 1 ;
[Fig. 3] est une vue en coupe selon la ligne III-III de la figure 2 ;
[Fig. 4] représente une vue de dessous, suivant une portion inférieure du dispositif de la figure 1 ;
[Fig. 5] représente une vue en coupe selon la ligne V-V de la figure 2 de côté d'un dispositif d'assemblage sur un ensemble de rails ;
[Fig. 6] représente une vue de côté d'une selle sur-mesure suivant un mode de réalisation ;
[Fig. 7] représente une vue de trois-quarts de dessous, suivant une portion inférieure, de la selle de la figure 6.

Sur les dessins, des références identiques désignent des objets identiques ou similaires.

### DESCRIPTION DÉTAILLÉE

L'invention concerne les sièges de type selles pour un véhicule de type vélo. Elle pourra cependant être appliquée de manière immédiate aux sièges d'autres véhicules qui rencontrent les problématiques similaires, par exemple les sièges de moto.

Plus précisément, l'invention concerne un siège formant un dispositif de prise d'empreinte, mais également un siège formant la selle finale.

Enfin, plus précisément encore, l'invention concerne la fabrication sur-mesure d'un siège de type selle à partir d'un siège de type dispositif de prise d'empreinte.

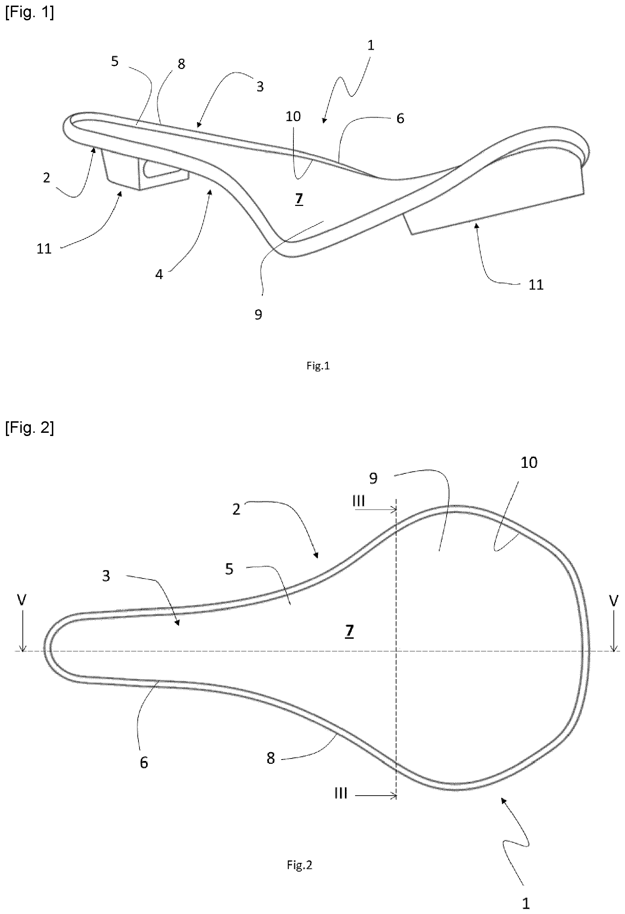

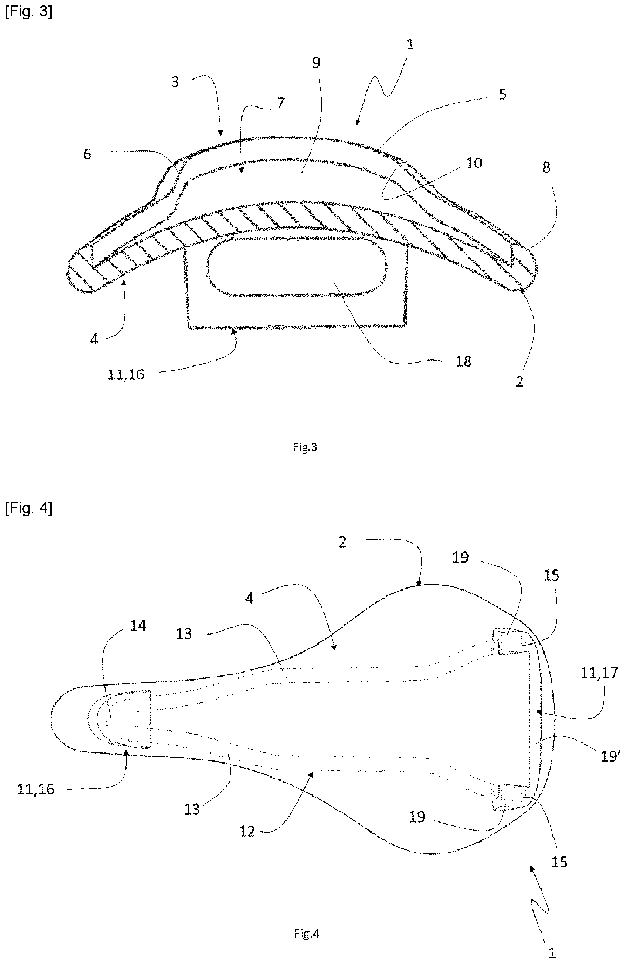

Il est d'abord décrit un siège formant un dispositif 1 de prise d'empreinte, dont un mode de réalisation est illustré notamment sur les figures 1 à 5. Un tel dispositif est également appelé porte-empreinte.

Le dispositif 1 comprend un corps **2** principal qui présente une portion **3** supérieure dite d'assise et une portion **4** inférieure dite d'assemblage.

Dans ce qui suit, les termes supérieur, inférieur, au-dessus, en-dessous, et leurs variantes doivent être compris selon leur sens naturel par rapport à l'orientation de la figure 1, sur laquelle le dispositif de prise d'empreinte est dans une orientation permettant à un cycliste de s'assoir sur la portion 3 supérieure dite d'assise.

Le corps 2 principal a la forme générale d'une selle. A des fins de clarté, il est défini sur le corps 2 principal, une partie avant et une partie arrière, la partie avant ayant une dimension transversale inférieure à celle de la partie arrière, comme on le trouve communément sur les selles de vélo, destinée à s'étendre entre les jambes d'un utilisateur.

Dans ce qui suit, on définit une direction longitudinale comme étant la direction d'extension avant/arrière du corps 2 en forme de selle, une direction transversale comme étant sensiblement perpendiculaire à la direction longitudinale, et une direction verticale comme correspondant à la direction inférieure/supérieure du corps 2 principal.

La portion 3 d'assise est de forme adaptée pour être en contact avec au moins une partie du fessier d'un cycliste lorsqu'il est assis sur la portion 3 d'assise. Il existe plusieurs modèles pour simuler le contact entre un fessier et une selle, qui ne sont pas l'objet de la présente demande mais qui peuvent être utilisés pour mettre au point la forme de la portion 3 d'assise. Ainsi, le dispositif 1 forme également un siège.

Plus précisément, la portion 3 d'assise présente une forme dite anatomo-fonctionnelle, définie par une surface **5** et un contour **6,** ou rebord, c'est-à-dire que le contour 6 borde la surface 5. Par anatomo-fonctionnelle, on désigne une forme adaptée à l'anatomie humaine, proche de l'enveloppe fonctionnelle des surfaces d'appui du cycliste assis sur sa selle. Cette forme anatomo-fonctionnelle est mise au point par exemple à partir de plusieurs empreintes précédemment réalisées.

La portion 3 d'assise comprend un creux **7,** qui forme une cavité de réception pour recevoir de manière temporaire un matériau de prise d'empreinte. La cavité 7 de réception est bordée au moins en partie par le contour 6 de la forme anatomo-fonctionnelle, c'est-à-dire que la cavité 7 s'étend sur au moins une partie de la surface 5 de la portion 3 d'assise. Selon un mode de réalisation, qui est celui des figures, la cavité 7 peut s'étendre sur l'ensemble de la surface 5 de la portion 3 d'assise, de sorte qu'elle est bordée entièrement par le contour 6 de la forme anatomo-fonctionnelle. La surface 5 est alors confondue avec l'ouverture de la cavité 7 de réception. Selon un autre mode de réalisation, la cavité 7 s'étend sur une portion seulement de la surface 5 de la portion d'assise, de sorte que la cavité 7 est bordée au moins en partie par un rebord qui n'est pas le contour 6 de forme anatomo-fonctionnelle. Pour des raisons qui seront explicitées plus loin, la cavité 7 s'étend au moins dans la partie arrière du corps 2 principal, de sorte que seule la partie avant peut est dépourvue de cavité 7.

La cavité 7 s'étend suivant une profondeur, c'est-à-dire une dimension sensiblement suivant la direction verticale, de l'ordre de quelques millimètres, par exemple compris entre 2 et 7 mm, et de préférence compris entre 3 et 5 mm (millimètres). Elle comprend donc un fond **9** et une paroi **10** latérale permettant de retenir le matériau de prise d'empreinte et de le contenir dans la cavité 7 même sous l'effet du poids du cycliste. Ainsi, comme cela sera également explicité plus loin, l'empreinte prise présentera un contour correspondant au moins en partie au contour 6 de la forme anatomo-fonctionnelle de la portion 3 d'assise.

Un rebord **8,** de préférence arrondi, réalise la jonction entre la portion 3 d'assise et la portion 4 d'assemblage.

Le dispositif 1 de prise d'empreinte comprend en outre un dispositif **11** d'assemblage amovible destiné à assembler le dispositif 1 de prise d'empreinte sur un cadre du vélo, de manière à réaliser une fixation rigide de manière temporaire.

Par amovible, on désigne ici la propriété selon laquelle la fixation peut être retirée aisément, sans détériorer ni détruire le dispositif 11 d'assemblage, ni sans mettre en oeuvre un savoir-faire dépassant celui attendu par un cycliste.

Le dispositif 11 d'assemblage peut être en contact direct avec le cadre du vélo pour assurer la fixation. Toutefois, selon un mode de réalisation préféré, le dispositif 11 d'assemblage est destiné à être assemblé indirectement au vélo, par l'intermédiaire d'un ensemble **12** de rails. Un tel ensemble 12 de rails se retrouve généralement sur les selles de vélos. Il comprend typiquement deux rails **13** sensiblement parallèles et symétriques l'un de l'autre, reliés par une portion courbe formant section **14** de liaison. Chaque rail 13 comprend alors une portion d'extrémité **15** libre, à l'opposé de la section 14 de liaison reliant les deux autres extrémités des rails 13. La portion d'extrémité 15 libre est sensiblement rectiligne. Typiquement, l'ensemble 12 de rails est destiné à être mis en prise avec un élément appelé chariot, non représenté sur les figures, lui-même fixé à l'extrémité d'un tube de selle du cadre du vélo, comme présenté en introduction. Plus précisément, un tel chariot se fixe rigidement en venant en prise sur chacun des rails 13 de l'ensemble 12 de rails, puis par serrage.

Le dispositif 11 d'assemblage comprend deux blocs **16, 17,** à savoir un bloc 16 dit avant, fixé sur la portion 4 d'assemblage du côté avant et un bloc 17 dit arrière, fixé sur la portion 4 d'assemblage du côté arrière. Chacun des blocs 16, 17 est de préférence monobloc, c'est-à-dire qu'il est réalisé en une seule partie non démontable.

Le bloc 16 avant comprend un logement **18,** s'étendant sensiblement longitudinalement, et destiné à recevoir la section 14 de liaison de l'ensemble 12 de rails. De manière classique, la section 14 de liaison est déformable élastiquement de manière à pouvoir rapprocher les deux rails 13 l'un de l'autre.

Par déformable élastiquement, on désigne ici la propriété selon laquelle la section 14 de liaison peut se déformer sans se rompre sous l'action d'une contrainte maximale, et reprendre sa forme initiale en absence de contrainte. Ainsi, en présence d'une contrainte, l'ensemble 12 de rails est mis sous tension mécanique.

La forme et les dimensions du logement 18 du bloc 16 avant sont par exemple prévues pour que, lorsque la section 14 de liaison est insérée dans le logement 18, la contrainte exercée sur l'ensemble 12 de rails est nulle, et dans tous les cas inférieure à la contrainte maximale.

Le bloc 17 arrière comprend deux boitiers **19**, chacun étant destiné à loger et retenir un rail 13 de l'ensemble 12 de rails.

Plus précisément, chaque boitier 19 est monobloc, en une seule partie, et comprend une rainure **20** de retenue. Chaque rainure 20 de retenue s'étend sensiblement longitudinalement, et débouche sur une face du boîtier 19 correspondant dirigée vers l'avant. Chaque rainure 20 de retenue peut déboucher également sur une face longitudinalement opposée, dirigée vers l'arrière. Toutefois, les rainures 20 de retenue sont de préférence bouchées de ce côté vers l'arrière, afin de limiter l'intrusion de saletés qui peuvent accélérer l'usure de l'ensemble 12 de rails 13 et du porte-empreinte 1. Une branche **19'** peut relier les deux boîtiers 19 sur leur face dirigée vers l'arrière afin de renforcer la tenue mécanique du bloc 17 arrière et faciliter la mise en place des rails 13 dans les rainures 20 de retenue en guidant leur positionnement. Les deux boîtiers 19 sont disposés en vis-à-vis, c'est-à-dire que les ouvertures de leur rainure 20 de retenue se font face, et sont sensiblement à un même niveau suivant une direction transversale. Les rainures 20 de retenue sont de section sensiblement correspondante à celle des rails 13. Plus précisément, les rainures 20 de retenues sont destinées à loger les portions d'extrémités 15 libres des rails. Ainsi, la distance entre le fond des rainures 20 de retenue du bloc 17 arrière est déterminée de manière à être sensiblement égale, éventuellement légèrement inférieure à la distance entre les portions d'extrémités 15 libres des rails 13 de l'ensemble 12 de rails. Les rainures 20 de retenue s'étendent suivant la direction longitudinale de préférence de manière sensiblement rectiligne.

Le dispositif 11 d'assemblage peut être monobloc avec le corps 2 principal. Le dispositif 1 de prise d'empreinte se présente ainsi sous la forme d'une pièce unique, indémontable. Il est par exemple obtenu par fabrication par impression 3D.

Ainsi, pour monter le porte-empreinte 1 sur l'ensemble 12 de rails, la section 14 de liaison est insérée dans le logement 18 du bloc 16 avant. Puis les portions d'extrémités 15 libres des rails sont insérées chacune dans une rainure 20 de retenue du bloc 17 arrière. En variante, les portions 15 d'extrémité libres peuvent être rapprochées l'une de l'autre par déformation élastique de la section 14 de liaison de manière à mettre chaque rail 13 entre les deux boîtiers 19, devant l'ouverture de la rainure d'un boîtier 19 du bloc 17 arrière. Cette déformation est réalisée de préférence en exerçant une contrainte manuelle. En relâchant la contrainte, les rails 13 s'écartent l'un de l'autre et les portions d'extrémité 15 libres pénètrent chacune dans une rainure 20 de retenue. De préférence, les extrémités libres des rails 13 sont alors dans les rainures 20 de retenue, évitant qu'elles ne blessent le cycliste. Les rails 13 sont bloqués dans les rainures 20 de retenue principalement par friction avec le fond des rainures 20 de retenue. En variante ou en combinaison, les rails 13 peuvent être bloqués en étant légèrement sous tension dans les rainures 20 de retenue. Il est alors obtenu un ensemble 30 de siège, formé par le porte-empreinte 1 et l'ensemble 12 de rails. Un verrouillage de l'ensemble 12 de rails dans les boîtiers 19 est réalisé lorsque l'ensemble 12 de rails est associé à un chariot, qui, lorsqu'il est serré sur les rails 13, bloque l'écart entre les rails 13 afin de les maintenir en butée dans le fond des rainures 20 de retenue.

Pour démonter le porte-empreinte 1 de l'ensemble de rails 12, il suffit de déverrouiller l'ensemble 12 de rails en démontant le chariot, d'exercer une contrainte, par exemple manuelle, pour rapprocher les deux rails 13 l'un de l'autre de manière à les faire sortir des rainures 20 de retenue, puis à retirer la section 14 de liaison du logement 18 du bloc 16 avant.

Ainsi, le dispositif 11 d'assemblage permet un montage et un démontage du porte-empreinte 1 sur l'ensemble 12 de rails qui sont rapides et simples. Une fois le montage réalisé, et verrouillé avec le chariot, la fixation entre le porte-empreinte 1 et l'ensemble 12 de rails est rigide, robuste.

Selon un mode de réalisation, le bloc 16 avant et le bloc 17 arrière sont monoblocs avec le corps 2 du porte-empreinte 1, facilitant la fabrication du porte-empreinte 1, en évitant notamment la gestion de pièces séparées et des étapes d'assemblage.

Le porte-empreinte 1 ainsi formé permet de réaliser une prise d'empreinte rapide et fiable pour réaliser une selle sur-mesure.

Par exemple, l'ensemble 30 de siège est fourni à un cycliste. Plusieurs formats de porte-empreinte 1 peuvent être prévus, par exemple en fonction de la taille, de la morphologie et/ou des besoins du cycliste, de sorte que la forme anatomo-fonctionnelle du porte-empreinte 1 se rapproche des besoins du cycliste. Le porte-empreinte 1 peut être assemblé à un ensemble 12 de rails pour pouvoir être monté sur un vélo, comme une selle. Notamment, un chariot à l'extrémité d'un tube du cadre du vélo vient en prise avec l'ensemble 12 de rails, et verrouille les rails 13 dans les rainures 20 de retenue des boîtiers 19. Un matériau de prise d'empreinte est mis en place dans la cavité 7 de réception, avant ou après le montage sur le vélo. Par exemple, la cavité 7 de réception est remplie d'un matériau de prise d'empreinte. La cavité 7 de réception est remplie avec soin, de manière à ce que le matériau de prise d'empreinte remplisse complètement la cavité 7 de réception, notamment en suivant au moins une partie du rebord 6 de la forme anatomo-fonctionnelle. De préférence encore, le volume de matériau de prise d'empreinte est sensiblement égal au volume de la cavité 7 de réception, voire supérieur, de sorte que le matériau de prise d'empreinte ne déborde pas, ou très peu, au-delà du contour 6. Lorsque le matériau de prise d'empreinte déborde de la cavité 7 de réception, ce débordement est réalisé de manière contrôlée, par exemple dans des régions ciblées. En d'autres termes, le matériau de prise d'empreinte affleure la surface 5 de la forme anatomo-fonctionnelle. Le cycliste s'installe sur la portion 3 d'assise du porte-empreinte 1, au moins une partie de son fessier étant en contact avec le matériau de prise d'empreinte dans la cavité 7 de réception. Ce contact se situe essentiellement dans la partie arrière du corps 2 principal, la partie avant se plaçant entre les jambes du cycliste. En exerçant une pression sur le matériau de prise d'empreinte, celui-ci se déforme dans la cavité 7 de réception, la paroi 10 latérale assurant la retenue du matériau de prise d'empreinte dans la cavité 7. La prise d'empreinte est réalisée de préférence de manière dynamique, c'est-à-dire que le cycliste assis sur le porte-empreinte 1 peut utiliser le vélo et pédaler, voire effectuer une sortie avec son vélo équipé du porte-empreinte 1, le porte-empreinte 1 servant de selle. Le rebord 8 arrondi limite les risques de blessure lors des mouvements du cycliste. La prise d'empreinte est effectuée en quelques minutes.

Par exemple, le matériau de prise d'empreinte est un silicone réticulant par condensation, dont la viscosité et les capacités de déformation sont particulièrement adaptées au dispositif 1 de prise d'empreinte. Toutefois, tout autre matériau de prise d'empreinte peut être utilisé.

Une fois l'empreinte formée dans le matériau de prise d'empreinte, l'ensemble 30 de siège est retiré du vélo. Eventuellement, l'ensemble 12 de rail, séparé du chariot, peut être séparé du porte-empreinte 1. L'empreinte ainsi formée dans le matériau de prise d'empreinte présente au moins une partie de son contour qui correspond au contour 6 de la forme anatomo-fonctionnelle du dispositif 1 de prise d'empreinte choisi.

L'empreinte peut ensuite être utilisée afin de fabriquer la selle sur-mesure.

Selon un mode de réalisation, une prise d'images en 3D de l'empreinte, par exemple avec un scanner 3D, est réalisée afin d'obtenir un modèle numérique en trois dimensions. Le modèle d'empreinte, dont le contour est au moins en partie déterminé par le contour 6 de la forme anatomo-fonctionnelle, sert de base au calcul d'un modèle sur-mesure de la selle correspondante. Le modèle de la selle sur-mesure peut ensuite être transmis à une machine de fabrication par impression 3D. La selle sur-mesure ainsi obtenue comprend alors une surface d'assise qui correspond parfaitement au cycliste dont l'empreinte a été prise.

Comme l'empreinte présente un contour correspondant à la forme anatomo-fonctionnelle, laquelle est partiellement prédéterminée, la fabrication par impression 3D est plus rapide. De plus, lorsque la cavité 7 de réception ne s'étend que sur une partie de la surface 5 de la forme anatomo-fonctionnelle, l'empreinte ne peut correspondre qu'à cette partie. L'autre partie de la selle peut alors être choisie à partir d'une base de données, et être combinée au modèle d'empreinte afin d'obtenir le modèle complet la selle sur-mesure complète. En d'autres termes, le modèle numérique peut être mis au point à partir d'un modèle préenregistré comprenant un contour anatomo-fonctionnel, et le cas échéant une partie avant d'une selle, complété par le modèle de l'empreinte du cycliste. La fabrication par impression 3D s'en trouve là encore simplifiée.

Le confort de l'utilisateur est maximisé, la selle sur-mesure comprenant un contour correspondant au moins en au contour 6 anatomo-fonctionnelle éventuellement corrigé par la prise d'empreinte, et une surface d'assise personnalisée.

Ces simplifications permettent notamment de fabriquer la selle complète sur-mesure plus rapidement, et donc de réduire les coûts de fabrication et de les rendre ainsi accessibles à un public plus large.

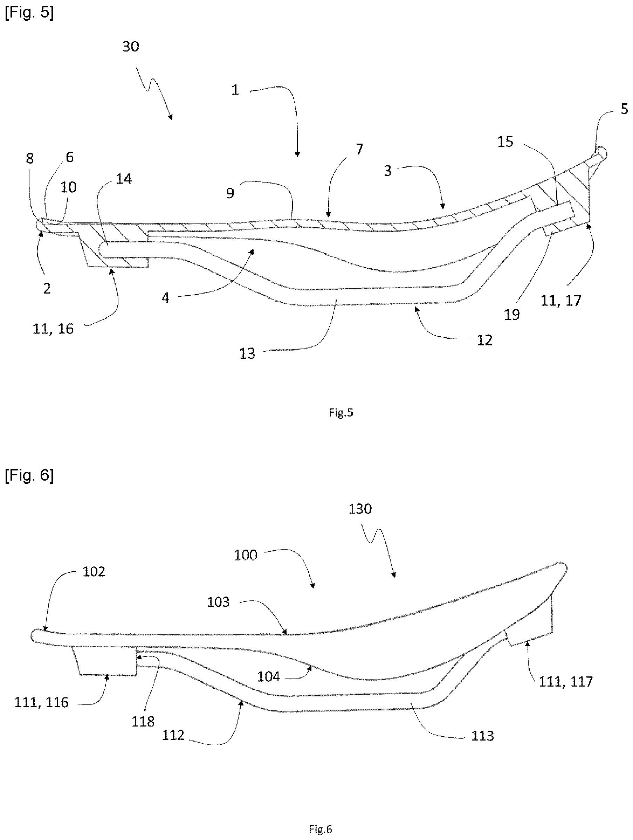

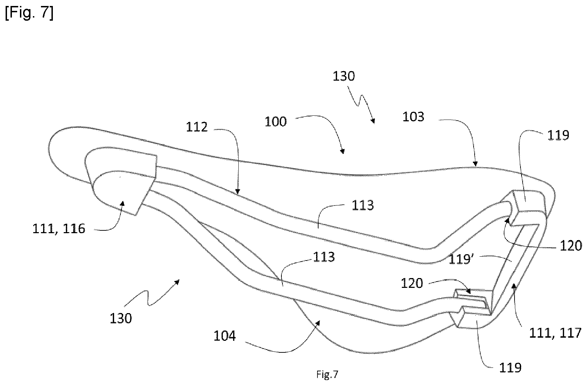

On va maintenant décrire, à l'aide des figures 6 et 7, un exemple d'un siège qui est une selle finale, en l'occurrence une selle **100** sur-mesure fabriquée à partir d'un modèle obtenu par une prise d'empreinte à l'aide du porte-empreinte 1 décrit précédemment, ainsi eu d'un ensemble de siège 130 comprenant une telle selle.

La selle 100 et l'ensemble 130 de siège comprennent des caractéristiques communes, avec des fonctions identiques, avec le porte-empreinte 1 et l'ensemble 30 de siège précédent, qui ne seront pas décrites de nouveau. Sur les figures, les éléments de la selle 100 communs avec ceux du porte-empreinte 1 et de l'ensemble de siège 30 précédent portent les mêmes références augmentées du chiffre 100.

Ainsi, notamment, la selle 100 comprend un corps **102** principal, qui présente une portion **103** supérieure dite d'assise, de forme adaptée pour être en contact avec une partie du fessier d'un utilisateur et une portion **104** inférieure dite d'assemblage sur un ensemble **112** de rails de selle. Comme précédemment, l'ensemble 112 de rails comprend deux rails **113** sensiblement parallèles reliés par une section de liaison.

La forme de la portion 103 d'assise définit sur le corps 102 principal, suivant une direction longitudinale, une partie dite avant et une parie dite arrière, la partie avant étant d'une dimension transversale inférieure à celle de la partie arrière. Ainsi, la partie arrière est destinée principalement à être en contact avec au moins une partie du fessier d'un cycliste, tandis que la partie avant est destinée principalement à être entre les jambes du cycliste.

La portion 103 d'assise présente des formes et des dimensions qui peuvent être parfaitement adaptées au cycliste grâce à la fabrication à partir d'une empreinte prise avec le porte-empreinte 1.

Comme pour le porte-empreinte 1, la selle 100 comprend un dispositif **111** d'assemblage amovible sur l'ensemble 112 de rails. Le dispositif 111 d'assemblage comprend un bloc **116** dit avant fixé sur la partie avant du corps principal et un bloc **117** dit arrière fixé sur la partie arrière du corps principal. Le bloc 116 avant comprend un logement pour la section de liaison de l'ensemble 112 de rails. Le bloc 117 arrière comprend deux boîtiers 119 monoblocs, reliés par une branche **119'** et munis chacun d'une rainure **120** de retenue. Le bloc 116 avant comme le bloc 17 arrière sont monoblocs, c'est-à-dire qu'ils sont formés en une seule partie non démontable.

De préférence, chacun du bloc 116 avant et du bloc 117 arrière est monobloc avec le corps 102 de la selle 100. Ainsi, le dispositif 111 d'assemblage est fabriqué en même temps que le corps 102, notamment par impression 3D. A l'issue de l'étape de fabrication, il suffit alors d'assembler la selle sur un ensemble 112 de rails comme vu précédemment pour le porte-empreinte 1, afin d'obtenir un ensemble **130** de siège. Il est alors évité une étape fastidieuse de montage impliquant des pièces supplémentaires et l'utilisation d'outils. La fabrication de la selle 100 sur mesure s'en trouve simplifiée, et les coûts sont là encore diminués. Le montage de la selle 100 sur l'ensemble 112 de rails pour obtenir l'ensemble 130 de siège peut être réalisé par le cycliste, de sorte que la selle 100 et l'ensemble 112 de rails peuvent être livrés non assemblés, facilitant le stockage et la livraison.

Ainsi, lors de la mise au point du modèle de la selle à partir de la prise d'empreinte, un modèle du dispositif 111 d'assemblage peut être rajouté, par exemple à partir d'une base de données, avant la transmission à la machine d'impression 3D. Ainsi, la selle 100 sur-mesure en sortie de la machine de fabrication 3D peut comprendre un dispositif 111 d'assemblage en fonction par exemple d'un type d'ensemble de rails, sans devoir revoir l'ensemble du procédé de fabrication.

La selle 100 peut en outre être facilement démontée de l'ensemble de rails, par exemple pour être changée.

La selle 100 est fabriquée par exemple en polymère, particulièrement adapté à une fabrication par impression 3D. Ce choix de matériau assure une selle résistante.

La forme de la portion 103 d'assise étant parfaitement adaptée au cycliste, le matériau rigide apporte un confort satisfaisant au cycliste, sans qu'il soit nécessaire d'ajouter un rembourrage. La fabrication par impression 3D permet en outre de choisir une couleur et/ou des motifs selon les demandes du cycliste. Toutefois, une fois l'étape de fabrication par impression 3D terminée, une couche de rembourrage peut être mise en place sur la portion 103 d'assise afin de se rapprocher des selles existantes selon les demandes du cycliste. De manière connue, il peut s'agir par exemple d'une couche en mousse. Une couche esthétique, par exemple en tissu, en cuir, similicuir, ou autre peut recouvrir la couche en mousse.

L'ensemble 12, 112 de rails est par exemple en titane ou alliage de titane, garantissant une bonne tenue mécanique.

Il a été décrit un dispositif 11 d'assemblage qui peut être considéré indépendamment des autres caractéristiques décrites ci-dessus. Ainsi, il a été décrit un siège 1, 100 de type selle pour un véhicule de type vélo. Le siège 1, 100 comprend un corps 2, 102 principal présentant une portion 3, 103 supérieure dite d'assise de forme adaptée pour être en contact avec une partie du fessier d'un utilisateur et une portion 4, 104 inférieure dite d'assemblage sur un ensemble 12, 112 de rails de selle. La portion 3, 103 supérieure et la portion 4, 104 supérieure sont notamment situées sensiblement suivant une même direction verticale, dirigées dans deux sens opposés. L'ensemble 12, 112 de rails comprend notamment deux rails 13, 113 sensiblement parallèles reliés par une section 14 de liaison.

Le siège 1, 100 comprend en outre un dispositif 11, 111 d'assemblage amovible sur l'ensemble 12, 112 de rails. Plus précisément, le dispositif 11, 111 d'assemblage est fixé sur la portion 4, 104 d'assemblage du corps 2, 102 principal, et comprend un bloc 16, 116 dit avant comprenant un logement 18, 118 destiné à recevoir la section de liaison de l'ensemble 12, 112 de rails et un bloc 17, 117 dit arrière.

Le bloc 17, 117 arrière comprend deux boitiers 19, 119. Chaque boitier 19, 119 est monobloc et comprend une rainure 20, 120 de retenue. Les deux rainures 20, 120 de retenue s'étendent sensiblement parallèlement l'une à l'autre et en vis-à-vis l'une de l'autre, chaque rainure 20, 120 de retenue étant destinée à recevoir un rail 13,113 de l'ensemble 12, 112 de rails.

Le siège 1, 100 ainsi formé est plus facile à fabriquer. Le montage sur un ensemble 12, 112 de rails se fait simplement en plaçant les rails 13, 113 dans les blocs avant et arrière. Aucune étape de montage ou de démontage des blocs n'est nécessaire. Le maintien en place est obtenu principalement par friction. Le verrouillage est réalisé en assemblant l'ensemble 12, 112 de rails sur un chariot d'un tube de selle d'un vélo. Le remplacement du siège 1, 100 tout en conservant un même ensemble de rails est simplifié. Notamment, dans le cas de la fabrication d'une selle sur mesure, l'absence d'étape fastidieuse de montage sur l'ensemble 12, 112 de rails permet de diminuer les coûts, rendant plus accessible les selles sur-mesure. Le caractère amovible du dispositif 11, 111 d'assemblage est donc obtenu en évitant d'utiliser des outils et/ou de détruire le siège 1, 100 ou les rails 13, 113 pour séparer les rails 13, 113 du siège 1, 100.

Selon un mode de réalisation, les boîtiers 19, 119 du bloc 17, 117 arrière peuvent être monoblocs avec le corps 2, 102 principal. De même, en variante ou en combinaison, le bloc 16, 116 avant peut être monobloc avec le corps 2, 102 principal. Le siège 1, 100 s'en trouve simplifié, évitant d'utiliser un assemblage de pièces rapportées, tout en offrant les mêmes possibilités que les autres sièges pour le montage sur un ensemble de rails. La fabrication du siège est en outre encore simplifiée.

Il a également été décrit un ensemble 30, 130 de siège comprenant un siège 1, 100 tel que présenté ci-dessus, et un ensemble 12, 112 de rails. L'ensemble 12, 112 de rails comprend deux rails 13, 113 sensiblement parallèles reliés par une section 14 de liaison. La section 14 de liaison est insérée dans le logement 18, 118 du bloc 16, 116 avant et les rails 13, 113 sont chacun retenu dans une rainure 20, 120 de retenue du bloc 17, 117 arrière.

Selon un mode de réalisation, l'ensemble de rails peut être en titane, assurant légèreté et robustesse.

Il a également été décrit un procédé de fabrication d'un ensemble 30, 130 de siège. Le procédé de fabrication comprend :
- l'insertion de la section 14 de liaison dans le logement 18, 118 du bloc 16, 116 avant,
- l'insertion des rails 13, 113 chacun dans une rainure 20, 120 de retenue du bloc 17, 117 arrière.

Selon un mode de réalisation, le procédé de fabrication peut comprendre une étape préalable de fabrication du siège 1, 100 sous forme monobloc par impression 3D.

Il a enfin été décrit un procédé de montage d'un ensemble 30, 130 de siège tel que présenté ci-dessus sur un vélo, le vélo comprenant au moins un tube de selle munie d'un chariot. Le procédé de fabrication comprend :
- l'insertion de la section 14 de liaison dans le logement 18, 118 du bloc 16, 116 avant,
- l'insertion des rails 13, 113 chacun dans une rainure 20, 120 de retenue du bloc 17, 117 arrière ;
- le verrouillage des rails 13, 113 dans les rainures 20, 120 de retenue par mise en prise avec le chariot.

## Revendications

1. Dispositif (1) pour la prise d'empreinte pour la fabrication sur-mesure d'un siège (100) pour véhicule de type vélo, le dispositif (1) pour la prise d'empreinte comprenant un corps (2) principal présentant une portion (3) supérieure dite d'assise et une portion (4) inférieure dite d'assemblage, dispositif (1) pour la prise d'empreinte dans lequel :
- la portion (3) d'assise présente une surface (5) et un contour (6) définissant au moins en partie une forme anatomo-fonctionnelle déterminée, ladite surface (5) comprenant un creux (7) formant une cavité de réception pour recevoir de manière temporaire un matériau de prise d'empreinte, ladite cavité (7) de réception étant bordée au moins en partie par ledit contour (6) de la forme anatomo-fonctionnelle, de sorte que le contour (6) assure la retenue du matériau de prise d'empreinte dans la cavité (7) de réception ;
- la portion (4) d'assemblage est fixée à un dispositif (11) d'assemblage amovible destiné à être fixé rigidement de manière temporaire sur un cadre du vélo.

2. Dispositif (1) de prise d'empreinte selon la revendication 1, dans lequel la cavité (7) de réception s'étend sur une partie exclusivement de la surface (5) de la portion (3) d'assise, le contour (6) de la forme anatomo-fonctionnelle bordant strictement une partie de la cavité (7) de réception.

3. Dispositif (1) de prise d'empreinte selon la revendication 1, dans lequel la cavité (7) de réception s'étend sur la totalité de la surface (5) de la portion (3) d'assise, le contour (6) de la forme anatomo-fonctionnelle bordant l'ensemble de la cavité (7) de réception.

4. Dispositif (1) de prise d'empreinte selon l'une quelconque des revendications précédentes, dans lequel le dispositif (11) d'assemblage est destiné à être assemblé sur un ensemble (12) de rails.

5. Dispositif (1) de prise d'empreinte selon l'une quelconque des revendications précédentes, dans lequel la cavité (7) de réception présente une profondeur comprise entre 3 et 5 mm.

6. Procédé de fabrication sur-mesure d'un siège (100) pour véhicule de type vélo comprenant :
- La fixation d'un dispositif (1) de prise d'empreinte selon l'une quelconque des revendications précédentes sur un vélo par assemblage du dispositif (11) d'assemblage sur le vélo et la mise en place d'un matériau de prise d'empreinte dans la cavité (7) de réception ;
- L'installation d'un cycliste à qui est destiné le siège (100) sur la portion (3) d'assise ;
- L'utilisation du vélo par le cycliste, de manière à imprimer son empreinte sur le matériau de prise d'empreinte ;
- La récupération du dispositif (1) de prise d'empreinte ;
- La réalisation d'un modèle numérique d'un siège à partir de l'empreinte ;
- La fabrication du siège (100) sur-mesure par impression 3D à partir du modèle numérique.

7. Procédé selon la revendication précédente, dans lequel la réalisation du modèle numérique comprend la prise d'images en 3D du matériau de prise d'empreinte.

8. Procédé selon la revendication 6 ou la revendication 7, dans lequel le matériau de prise d'empreinte comprend un silicone réticulant par condensation.

9. Procédé selon l'une quelconque des revendications 6 à 8 dans lequel l'étape de fabrication comprend la fabrication d'un dispositif (111) d'assemblage avec un vélo.

10. Procédé selon l'une quelconque des revendications 6 à 9, comprenant, après la fabrication par impression 3D, la mise en place d'une couche de rembourrage sur la selle (100).
